# EUROPÄISCHE PATENTSCHRIFT

(11) **EP 2 232 974 B1**
(45) Veröffentlichungstag und Bekanntmachung des Hinweises auf die Patenterteilung: **04.01.2012**
(21) Anmeldenummer: 10401037.6
(22) Anmeldetag: 23.03.2010
(51) Int. Cl.: A01B 63/11, A01B 63/22

(54) **Ein an das Kupplungselement eines Ackerschleppers ankuppelbares landwirschaftliches Gerät**
Agricultural device coupable to a tractor
Dispositif agricole accouplable à un tracteur

(30) Priorität: 25.03.2009 DE 102009014874
(43) Veröffentlichungstag der Anmeldung: 29.09.2010
(73) Patentinhaber: Amazonen-Werke H. Dreyer GmbH & Co. KG, 49205 Hasbergen (DE)
(72) Erfinder: Thielicke, René, 04275 Leipzig (DE); Sosnicki, Jürgen, 04155 Leipzig (DE)

(56) Entgegenhaltungen:
- DE-A1- 10 224 861
- FR-A1- 2 861 532
- US-A- 4 506 609
- US-A1- 2006 131 040

## Beschreibung

Die Erfindung betrifft ein an einen Ackerschlepper mittels eines auf der Vorderseite des Rahmens (1) des Gerätes angeordneten Kupplungselementes ankuppelbares landwirtschaftliches Gerät gemäß des Oberbegriffes des Patentanspruches 1.

Ein derartiges Gerät ist beispielsweise durch die DE 102 24 861 A1 oder DE 25 56 342 A1 bekannt. Diese hier beschriebenen Geräte sind an dem Dreipunktkupplungselement eines Ackerschleppers angeordnet und weisen eine zusätzliche Abstützvorrichtung mit einem Laufrad auf, welches sich hinter dem Gerät befindet, um während des Wende- oder Transportvorganges das Gerät abzustützen. An Stelle diese Geräte an dem Dreipunktkupplungselement anzuordnen, ist es auch möglich, sie nicht als getragene, sondern als gezogene Geräte auszubilden und über eine Deichsel an ein als Anhängekupplung ausgebildetes Kupplungselement eines Ackerschleppers anzukuppeln.

Während des Arbeitseinsatzes des Gerätes wird bei derartigen landwirtschaftlichen Geräten die das Laufrad aufweisende Abstützvorrichtung vom Boden abgehoben. Diese Abstützeinrichtung weist nach hinten ragende Tragbalken auf, welche auf ihrer Vorderseite mit einem Gelenk am Rahmen eines Gerätes angeordnet sind. Sie können dann mit einem zwischen dem Tragbalken der Abstützvorrichtung und dem Rahmen angeordneten doppeltwirkenden Hydraulikzylinder angehoben und abgesenkt werden. Während der Arbeitsstellung ist das Laufrad der Abstützvorrichtung zwar vom Boden abgehoben, ragt jedoch immer weit nach hinten, so dass es zum Aufschaukeln der Abstützvorrichtung kommen kann.

Der Erfindung liegt die Aufgabe zugrunde, eine verbesserte Abstützvorrichtung zu schaffen, bei welcher das Problem des Aufschaukelns eliminiert bzw. erheblich gegenüber dem Stand der Technik reduziert ist.

Diese Aufgabe wird erfindungsgemäß dadurch gelöst, dass das Gestänge als die Abstützvorrichtung bei deren Ausheben in Richtung des Kupplungselementes und/oder des Ackerschleppers und oberhalb des Rahmens des Gerätes verlagerbares Hubgestänge ausgebildet ist. Infolge dieser Maßnahme wird die Abstützvorrichtung über das erfindungsgemäße Gestänge beim Abheben vom Boden, wenn das Arbeitsgerät sich in Arbeitsposition befindet, nach vorn versetzt. Es befindet sich hier dann oberhalb des Rahmens des Gerätes. Hier ist aufgrund der dichteren Lage der Abstützvorrichtung zum Kupplungselement eine wesentlich verminderte Aufschaukelgefahr für die Abstützvorrichtung mit dem Laufrad gegeben.

Eine vorteilhafte Ausgestaltung des Gestänges des Abstützelementes lässt sich durch die Merkmale der Ansprüche 2 bis 4 verwirklichen.

Weitere Einzelheiten der Erfindung sind der Beispielsbeschreibung und den Zeichnungen zu entnehmen. Hierbei zeigen
- Fig. 1: das landwirtschaftliche Gerät in Transportstellung und perspektivischer Darstellung,
- Fig. 2: das Gerät gemäß Fig. 1 in Seitenansicht,
- Fig. 3: das landwirtschaftliche Gerät in Arbeitsstellung und perspektivischer Darstellung,
- Fig. 4: das Gerät gemäß Fig. 3 in Seitenansicht,
- Fig. 5: eine andere Ausgestaltung der Abstützeinrichtung des landwirtschaftlichen Gerätes in Transportstellung und in Seitenansicht,
- Fig. 6: das Gerät nach Fig. 5 in Arbeitsstellung und Seitenansicht.

Das als Bodenbearbeitungsgerät ausgebildet landwirtschaftliche Gerät weist den Rahmen 1 auf. Auf der Vorderseite des Rahmens 1 ist eine Zugdeichsel 2 mit einem Kupplungselement 3 angeordnet, über welche das landwirtschaftliche Gerät an die Zugvorrichtung eines Ackerschleppers anzukuppeln ist. An dem Rahmen 1 des Gerätes sind mittels Halterungen Bodenbearbeitungselemente, die als Scheiben 4 ausgebildet sind, angeordnet. Das Bodenbearbeitungsgerät ist als Kurzscheibenegge ausgebildet. Hinter den Bodenbearbeitungswerkzeugen 4 ist mittels eines Haltearmes eine in Höhenrichtung verstellbare Nachlaufwalze 5 angeordnet, welche die Eindringtiefe der Bodenbearbeitungswerkzeuge 4 in den Boden bestimmt. Weiterhin dient die Walze 5 zur Rückverfestigung des von den Bodenbearbeitungswerkzeugen 4 bearbeiteten Bodens. Die Zugdeichsel 2 ist an den Dreipunktkupplungspunkten des Anbaubockes 6 des Gerätes angeordnet, so dass das Gerät bei einer geringen Arbeitsbreite und einem entsprechend ausgestatteten Ackerschlepper an dessen Dreipunkthebevorrichtung anzuordnen ist.

Auf der dem Kupplungselement 3 abgewandten Seite des Bodenbearbeitungsgerätes ist eine Abstützeinrichtung 7 angeordnet, die zumindest ein Laufrad 8, im Ausführungsbeispiel zwei beabstandet zueinander angeordnet Laufräder 8 aufweist. Die Abstützvorrichtung 7 ist über ein Gestänge 9 an dem Rahmen 1 des Gerätes angelenkt. Das Gestänge 9 weist übereinander angeordnete Lenker 10, die zumindest annähernd parallelogrammartig zueinander angeordnet sind, auf. Das Gestänge 9 ist aufgrund seiner Ausgestaltung als Viergelenkgestänge ausgestaltet.

Die Lenker 10 sind auf der Vorderseite mittels Gelenken 11 bewegbar und gelenkig an dem Rahmen 1 angeordnet. Die hinteren Enden der Lenker 10 des Hubgestänges sind an ein mit der Achse12 der Abstützeinrichtungen, an welchem die Laufräder 8 drehbar angeordnet sind, angeordnetem Gestängeteil 13 mittels Gelenken 14 gelenkig angeordnet.

Zwischen dem Rahmen 1 und den unteren Lenkern 10 ist ein als doppelt wirkender Hydraulikzylinder 15 ausgebildetes Aushubelement angeordnet. Somit ist der Hydraulikzylinder 15 als in zwei Richtungen wirksames Aushubelement ausgestaltet.

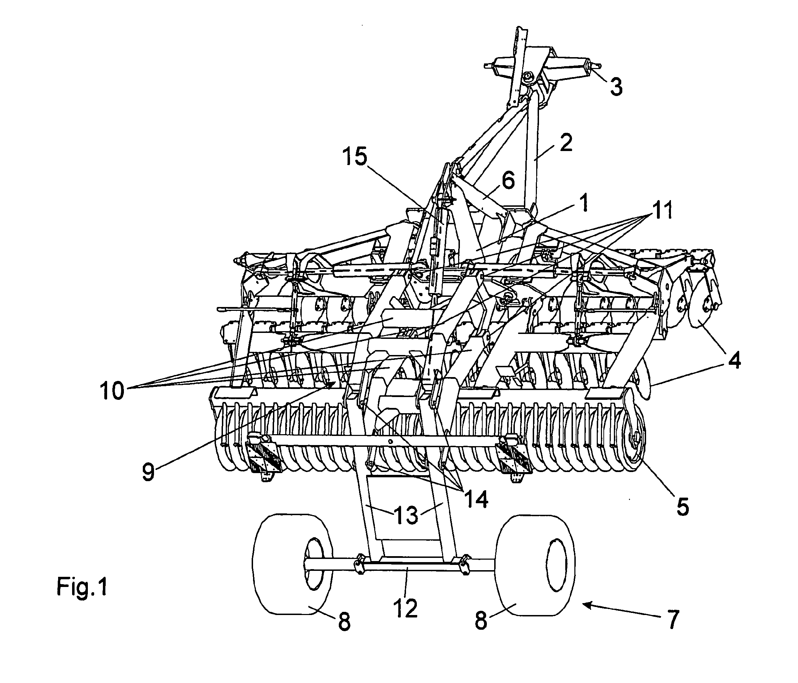

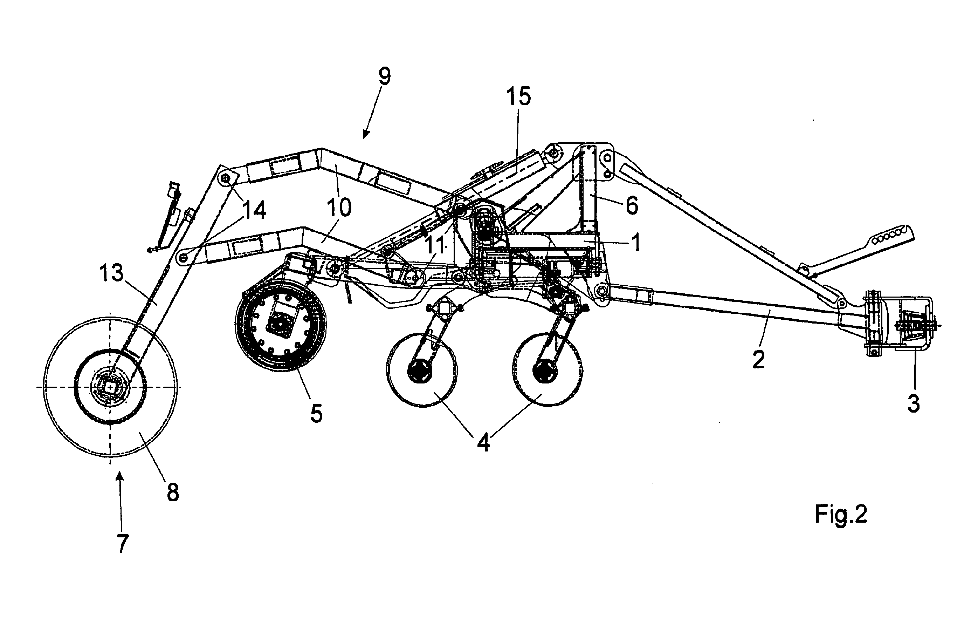

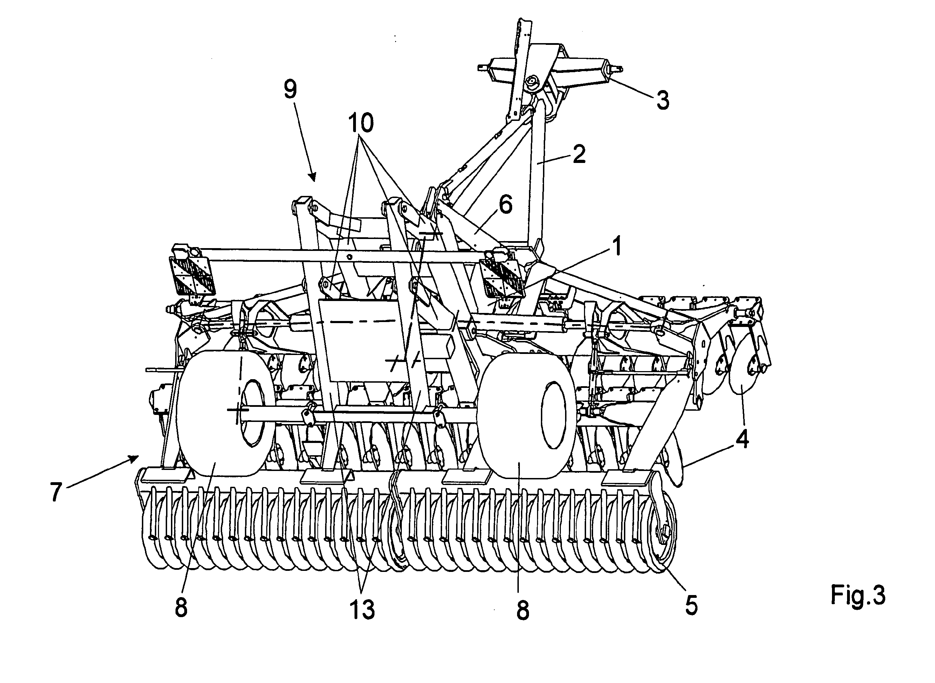

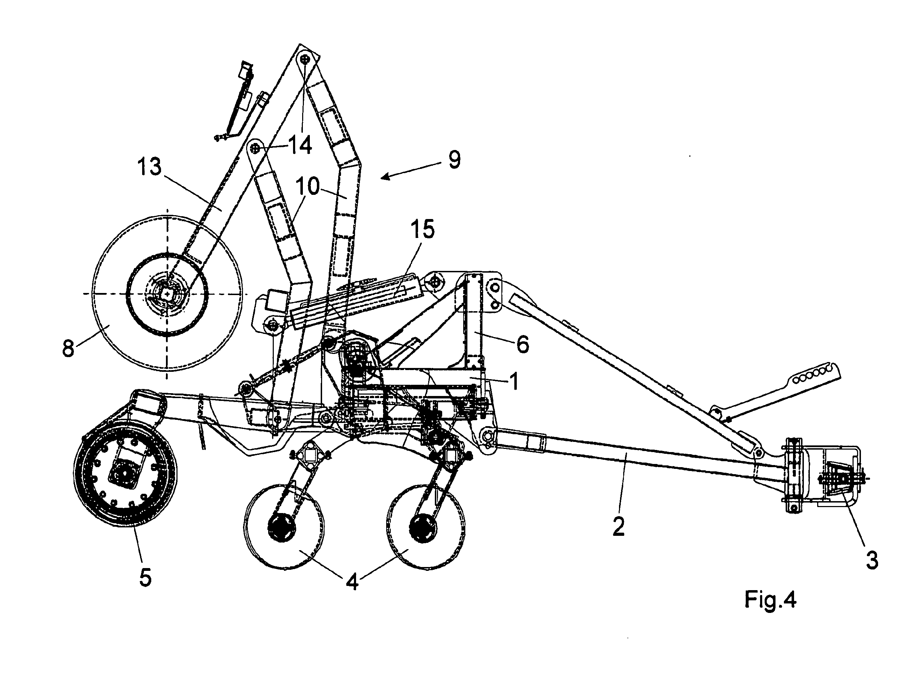

Über den Hydraulikzylinder 15 und die Lenker 10 kann das Gestänge 13 mit den Laufrädern 8, welche ein Fahrwerk bilden, wahlweise zum Arbeitseinsatz des Gerätes vom Boden abgehoben werden, wie die Fig. 3 und 4 zeigen, sowie gegen den Boden zum zumindest teilweisen Anheben oder Ausheben des Gerätes oder Teilen des Gerätes während des Transportes gedrückt werden, wie die Fig. 1 und 2 zeigen.

Das Gestänge mit den Lenkern 10 und dem Gestängeteil 13 ist derart ausgebildet, dass bei dem Ausheben die Laufräder 8 und das Aushubgestänge 7 in Richtung des Kupplungselementes 3, welches an dem Ackerschlepper anzuordnen ist, und oberhalb des Rahmens 1 des Gerätes zu verlagern sind. Somit wird durch Betätigen des Hydraulikzylinders 10 das Aushubgestänge 7 mit den Laufrädern 2 aus der in den Fig. 1 und 2 dargestellten Transportstellung, wenn das Gerät in Arbeitsstellung gebracht werden soll, von Boden abgehoben und gleichzeitig nach vorn in Richtung des Kupplungselementes 3 und oberhalb des Rahmens 1 und der Bodenbearbeitungswerkzeuge 4 und 8 verlagert. In dieser Position kann sich das Abstützelement 7 nicht oder nur bedingt bzw. im geringeren Umfang als im Stand der Technik aufschaukeln.

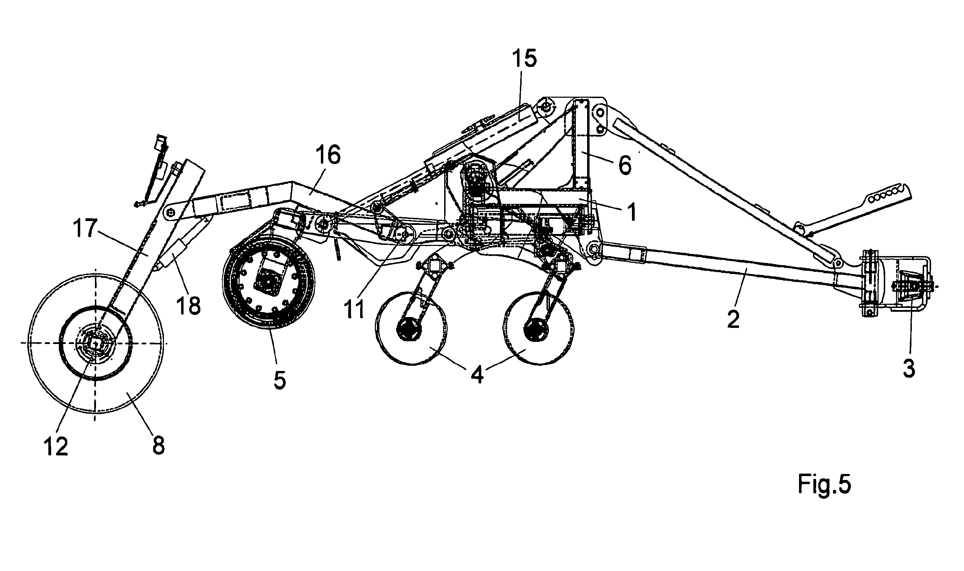

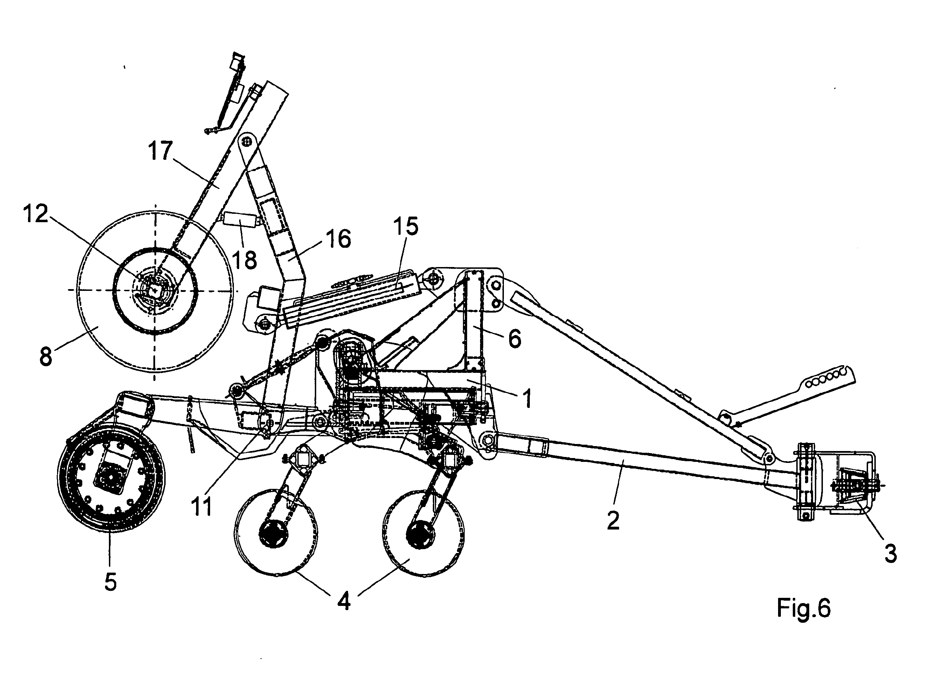

Das Gerät nach den Fig. 5 und 6 unterscheidet sich von dem Gerät nach den Fig. 1 bis 3 durch eine andere Ausgestaltung des Aushubgestänges der Abstützeinrichtung 7. Nach diesem Ausführungsbeispiel weist das Aushubgestänge nach hinten ragende Lenker 16 auf, welche auf ihrer Vorderseite mittels Gelenken 11 an dem Rahmen 1 angelenkt sind. An der Rückseite der Lenker 16 ist Lenker 16 mit der Achse 12 verbindende Gestängeteil 17 angeordnet. An der Achse 12 sind wiederum die Laufräder 8 drehbar befestigt. Zwischen den Lenkern 16 und dem Gestängeteil 17 ist der doppeltwirkende Hydraulikzylinder 18 angeordnet, mittels welchem die beiden Gestängeteile 16 und 17 zueinander bewegbar sind.

Beim Ausheben des Abstützelementes 7 wird über den doppeltwirkenden Zylinder 15, der zwischen dem Rahmen 1 und den Lenkern 16 angeordnet ist, die Lenker 16 nach vorn und oben gezogen. Gleichzeitig werden die Hydraulikzylinder 18 zwischen den Lenkern 16 und dem Gestängeteil 13 betätigt, so dass das Lenkergestänge mit den Laufrädern 8 und der Achse 12 nach vorn in die in Fig. 6 dargestellte Transportstellung gezogen wird.

## Patentansprüche

1. Ein an das Kupplungselement einen Ackerschlepper mittels eines auf der Vorderseite des Rahmens (1) des Gerätes angeordneten Kupplungselementes (3) ankuppelbares landwirtschaftliches Gerät mit zumindest einer auf der dem Kupplungselement (3) abgewandten Seite des Gerätes angeordneten und zumindest ein Laufrad (8) aufweisenden Abstützvorrichtung (7), welche über ein Gestänge (9) mit dem Rahmen (1) des Gerätes gegenüber dem Gerät bewegbar angeordnet ist, wobei das Gestänge (9) ein in zwei Richtungen wirksames Aushubelement (15), mittels welchem die Abstützvorrichtung (7) wahlweise vom Boden abhebbar und gegen den Boden zum zumindest teilweisen Anheben und/oder Ausheben des Gerätes oder Teilen des Gerätes während des Transportes drückbar ist, zugeordnet ist, **dadurch gekennzeichnet, dass** das Gestänge (9) als die Abstützvorrichtung (7) bei deren Ausheben in Richtung des Kupplungselementes (3) und/oder Ackerschleppers und oberhalb des Rahmens (1) des Gerätes verlagerbares Hubgestänge (10,13,16,17) ausgebildet ist.

2. Gerät nach Anspruch 1, **dadurch gekennzeichnet, dass** das Gestänge (9) zumindest annähernd parallelogrammartig ausgebildet ist.

3. Gerät nach Anspruch 1, **dadurch gekennzeichnet, dass** das Gestänge (9) zumindest annähernd parallelogrammartig angeordnete Lenker (10) aufweist.

4. Gerät nach Anspruch 1, **dadurch gekennzeichnet, dass** das Gestänge (9) als Viergelenkgestänge ausgebildet ist.

## Claims

1. An agricultural device which is couplable to the coupling member of a tractor by means of coupling member (3) arranged at the front end of the frame (1) of the device, said agricultural device having at least one support device (7), which is arranged at the end of the device remote from the coupling member (3), has at least one running wheel (8) and is arranged so as to be displaceable in relation to the device by means of a linkage (9) with the frame (1) of the device, wherein the linkage (9) has associated therewith a lifting-out member (15), which is effective in two directions, by means of which the support device (7) is selectively raisable off the ground and pressable against the ground for at least partial lifting and/or lifting-out of the device or parts of the device during transport, **characterized in that** the linkage (9) is realized as lifting linkage (10, 13, 16, 17) which can displace the support device (7) when it is lifted out in the direction of the coupling member (3) and/or of the tractor and above the frame (1) of the device.

2. Device according to Claim 1, **characterized in that** the linkage (9) is realized at least approximately in the manner of a parallelogram.

3. Device according to Claim 1, **characterized in that** the linkage (9) has guide rods (10) which are arranged at least approximately in the manner of a parallelogram.

4. Device according to Claim 1, **characterized in that** the linkage (9) is realized as four bar linkage.

## Revendications

1. Appareil agricole destiné à être couplé à un élément de couplage d'un tracteur agricole à l'aide d'un élément de couplage (3) prévu sur le côté avant du châssis (1) de l'appareil, qui comporte au moins un dispositif d'appui (7) prévu sur le côté de l'appareil à l'opposé de l'élément de couplage (3) et ayant au moins une roue de sustentation (8), le dispositif d'appui étant relié de manière mobile au châssis (1) de l'appareil, par rapport à l'appareil par l'intermédiaire d'une tringlerie (9),
* la tringlerie (9) comportant un élément de levage (15) agissant dans deux directions, par l'intermédiaire duquel le dispositif d'appui (7) peut être sélectivement soulevé par rapport au sol ou abaissé par rapport au sol, pour soulever et/ou lever au moins partiellement l'appareil ou des parties de l'appareil pendant le transport,
appareil **caractérisé en ce que**
la tringlerie (9) avec le dispositif d'appui (7) est réalisé comme tringlerie de soulèvement (10, 13, 16, 17) déplaçable, se soulevant en direction de l'élément de couplage (3) et/ou du tracteur et au-dessus du châssis (1) de l'appareil.

2. Appareil selon la revendication 1,
**caractérisé en ce que**
la tringlerie (9) est réalisée au moins sensiblement en forme de parallélogramme.

3. Appareil selon la revendication 1,
**caractérisé en ce que**
la tringlerie (9) comporte des bras (10) au moins disposés sensiblement comme parallélogramme.

4. Appareil selon la revendication 1,
**caractérisé en ce que**
la tringlerie (9) est un quadrangle articulé.
